# NEUE EUROPÄISCHE PATENTSCHRIFT

(11) **EP 1 030 757 B2**
(45) Veröffentlichungstag und Bekanntmachung des Hinweises auf die Entscheidung über den Einspruch: **26.10.2005**
(45) Hinweis auf die Patenterteilung: 10.10.2001
(21) Anmeldenummer: 98951637.2
(22) Anmeldetag: 10.11.1998
(51) Int. Cl.: B23F 21/03, B24D 3/30, B24D 18/00

(54) **VERBUNDHONRING**
COMPOSITE HONING RING
COURONNE DE HONING COMPOSITE

(30) Priorität: 10.11.1997 AT 70197 U
(43) Veröffentlichungstag der Anmeldung: 30.08.2000
(73) Patentinhaber: Rappold International Sales AG, 8700 Küsnacht (CH)
(72) Erfinder: RAPPOLD, Edgar, CH-6340 Baar (CH)
(74) Vertreter: Ellmeyer, Wolfgang
(86) Internationale Anmeldenummer: PCT/IB1998/001824
(87) Internationale Veröffentlichungsnummer: WO 1999/024203

(56) Entgegenhaltungen:
- DE-A- 19 703 261
- DE-C- 4 447 036
- GB-A- 1 374 513
- US-A- 3 623 275
- PATENT ABSTRACTS OF JAPAN vol. 016, no. 416 (M-1304), 2. September 1992 & JP 04 141373 A (KATSUMI YAMAGUCHI;OTHERS: 01), 14. Mai 1992

## Beschreibung

Die Erfindung betrifft Verbundwerkstoff-Honringe, bestehend aus einem Honteil und einem Trägerteil, wobei die beiden Teile aus unterschiedlichen Materialien bestehen.

Honringe sind in der Zahnflankenbearbeitungstechnik schon lange bekannt, ebenso ihre Einsatzbereiche. Sie können aus unterschiedlichen Werkstoffen aufgebaut sein, wobei die schleifaktive Zone meist aus kunstharzgebundenem Schleifmaterial besteht und die Trägerringe aus den gleichen Materialien aufgebaut sind. Der abrasive Teil weist erhebliche Porosität auf, die für manche Anwendungen durch Zusatz von Hohlkugeln oder Keramikagglomeraten künstlich induziert oder erhöht wird.

Diese Systemkombination entspricht der Wlrkungsweise herkömmlicher Schleifscheiben, wobei jedoch einerseits Vibrationen auf das zu bearbeitende Werkstück übertragen werden andererseits das Bohrungsspiel Ungenauigkeiten verursacht, die vor dem Einsatz korrigiert werden müssen, um einen stabilen Honprozeß zu ermöglichen. Ungleichmäßigkeit des Abrasivtells macht Verstärkungen erforderlich, da unverstärkte Honringe zu unkontrollierbaren Zahnabbrüchen neigen und somit nicht prozeßsicher sind. Die DE 44 47 036 C1 beschreibt einen Grund- und einen Arbeitskörper, d.h. einen Hon- und einen Trägerteil, beide aus mit Schleifpartikeln gefülltem Epoxyharz, in das im Honteil großdimennierte - in manchen Ausführungsformen mit Schnüren verbundene-Schleifkörper eingebettet sind.

Ziel der Erfindung ist die Vermeidung der oblgen Nachteile und wird erfindungsgemäß durch einen Verbundhonring nach Anspruch 1 gelöst

Diese niedrige Porosität wird durch Verdichtung der Honteil-Zusammensetzung unter Verwendung von heiBverpreßtem Epoxyharz erzielt. Durch diese Senkung der Porosität wird die Festigkeit erhöht und gleichzeitig die Schartigkeit nach der Zahnung des Abrasivtells drastisch verringert, was die Neigung zu Absplitterungen an den gehonten Werkstükken nahezu eliminiert und eine hohe Formstabilität des Honrings bewirkt.

Die bevorzugt verwendeten faserförmigen Verstärkungselemente haben insbesondere eine Länge von 0,5 bis 10 mm. Derartige Fasern können vorteilhaft Whiskers sein und verstärken nicht nur die Bindemittelmatrix, sondern wirken gemäß einer weiteren bevorzugten Ausführungsform beim Honprozeß auch werkstückbearbeitend - also abrasiv -, was eine zusätzliche Glättung der Werkstoffoberfläche und somit eine Verbesserung der Oberflächengüte mit sich bringt. Whiskers sind definitionsgemäß (siehe Römpp Chemie Lexikon 9. Auflage, Seite 5039, worauf vollinhaltlich Bezug genommen wird) faserförmige Einkristalle aus Metallen, Oxiden, Boriden, Carbiden, Nitriden, Polytitanat, Kohlenstoff etc. mit meist polygonalem Querschnitt.

Der Trägerteil des Honrings ist aus ungefülltem Epoxyharz, wodurch die Materialien für den schleifaktiven Honringteil und den Trägerteil unterschiedliche Dämpfungseigenschaften aufweisen. Der Trägerteil ist dabei elastisch und bewirkt eine Dämpfung von Maschinenvibrationen und Lagerschwingungen, die vom Trägerteil aufgenommen werden. Dadurch können selbst bei weniger stabilen Maschinen mit dem Erfindungsgegenstand optimale Honergebnisse erzielt und schwellende Prozeßkräfte vermieden werden.

Weiters besitzt der Trägerteil Fließeigenschaften unter Spannung. Beim Aufziehen des Erfindungsgegenstandes auf eine Maschinenaufnahme umschließt der Trägerteil diese spielfrei, d.h. ähnlich einem Preßsitz. Dies ermöglicht eine sehr hohe Rundlaufgenauigkeit, selbst bei wiederholtem Werkzeugwechsel, da ein derartiger Preßsitz erhalten bleibt.

In einer bevorzugten Ausführungsform Ist beim erfindungsgemäßen Verbundhonring der schleifaktive Honringteil mit Schleifkörnungen, vorzugsweise Korunden, SiC, Metallnitriden, Diamant und CBN-Kom, gefüllt, die insbesondere eine Korngröße von ≤ 200 µm aufweisen, was effizientes und gleichmäßiges Honen bei gleichzeitig geringem Verschleiß des Honrings ermöglicht.

Die Summe der vorstehend aufgezeigten EIgenschaften ergibt ein gutes Preis/Leistungs-Verhältnis, da der Honring dadurch eine wesentlich höhere Lebensdauer gegenüber herkömmlichen Honringen erzleit. Die Lebensdauer wird zusätzlich erhöht durch eine Verminderung der notwendigen Abrichtzyklen sowie durch minimale Zustellwerte beim Abrichtvorgang.

### Zusammensetzung der Honringelemente

### a) Verstärkter Honteil mit Verzahnung

### Bestandteile:

Polierkörnungen 10-95 Cew.-%, vorzugsweise Korund mit mittlerem Korndurchmesser von 200 *µ*m und feiner; alternativ SIC, Diamant, CBN, Metalicarbide, Nitride und mikrokristalline Korunde; Bindemittel(harze) 5-50 Gew.-%, vorzugsweise Epoxidharze;
Füllstoffe 0-15 Gew.-%, anorganische Metallsalze und/oder Oxide, organische Füllstoffe;
Faserstoffe 1-10 Gew.-%, vorzugsweise mit 0,5-10 mm Länge aus Glas, Keramik, Kohlenstoff, Kunststoffen (z.B. Aramiden, Amiden, Polyestern, etc.) und/oder Whiskers.

### Bestandteile:

Epoxidharze mit unterschiedlichen Härteranteilen von 0,02 bis 0,3 MA.

Die Erfindung wird nachstehend anhand von Ausführungsbeispielen unter Bezugnahme auf die Zeichnungen näher beschrieben.

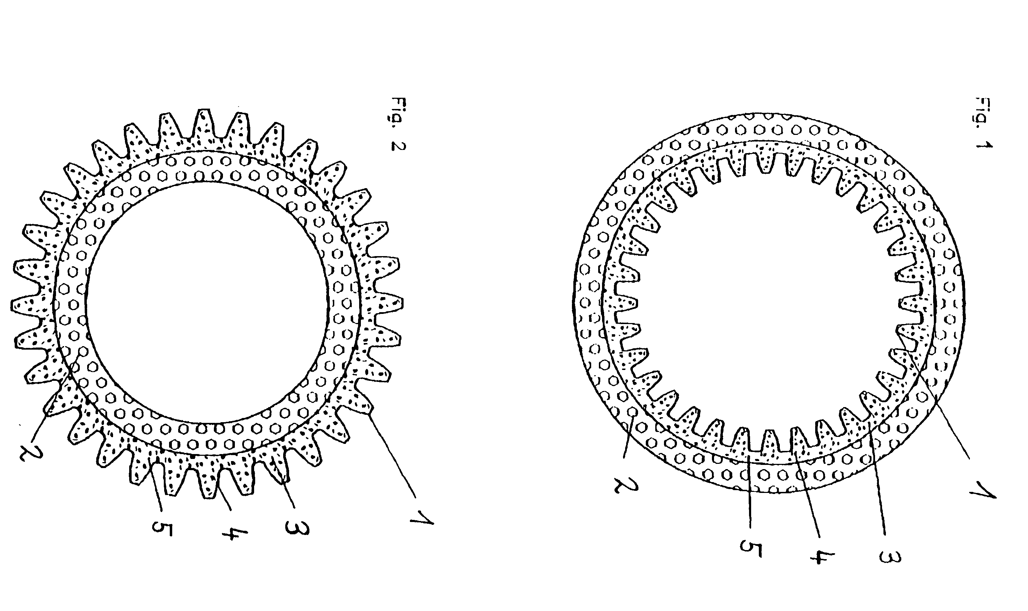

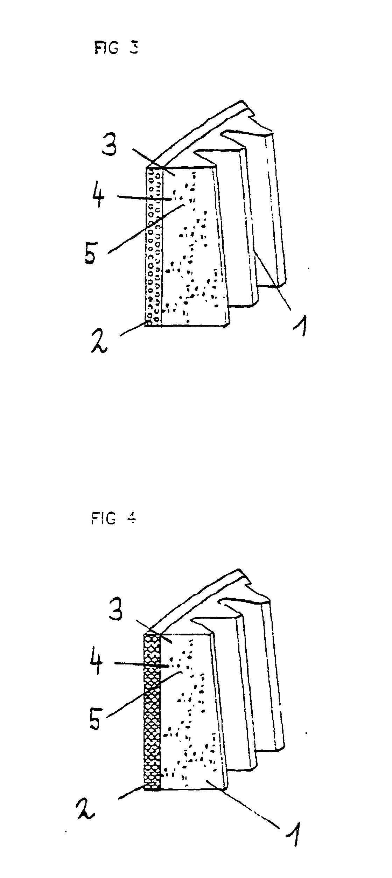

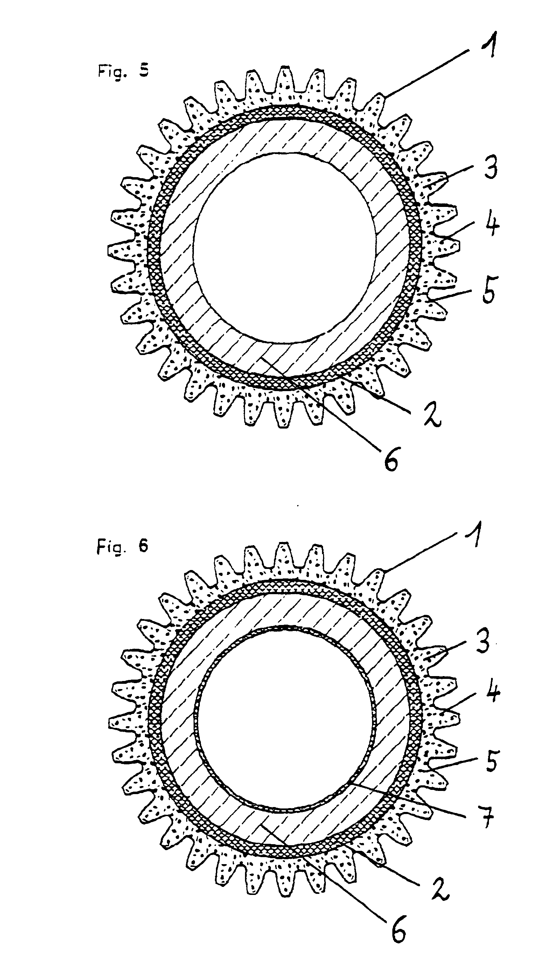

Fig. 1 stellt einen Honring mit innenliegender Verzahnung dar; Fig. 2 zeigt einen Honring, bei dem der schleifaktive Honteil außenliegend angeordnet ist. Die Fig. 3 und 4 zeigen entsprechende Schnitte von Honringen. Bei Fig. 5 ist auf dem Trägerkörper des Honrings eine Maschinenaufnahme andeutungsweise zu erkennen, die noch nicht vorgespannt ist. In Fig. 6 ist dieselbe Anordnung zu sehen wie bei Fig. 5, allerdings ist in diesem Fall die Maschinenaufnahme vorgespannt

in Fig. 1 erkennt man einen Honring mit innenliegendem Honteil 1 und den sich um diesen schließenden Trägerkörper 2. Der Trägerkörper 2 besteht aus einer nicht gefüllten Epoxyharzmasse, welche unter Druck Fließeigenschaft zeigt. Diese Eigenschaft ermöglicht es, den Honring auf Honmaschinenaufnahmen so zu befestigen, daß er nach nur geringem Abrichten elnsatzfähig ist und sofort optimale Rundlaufeigenschaften aufweist. Löst man die Vorspannung des Maschinenflansches, wird der Preßsitz aufgehoben und der Honring läßt sich abziehen.

Aus Fig. 1 ist ebenso ersichtlich, daß der Honteil 1 aus Schleif/Poliermasse besteht, die sich aus Schleifkörnungen 4, Faseranteilen 5 und Harzbindemittel 3 und evtl. Füllstoffen zusammensetzt. Die angeführten Komponenten sind unter "Zusammensetzung der Honringelemente" angeführt und können je nach zu bearbeitender Werkstofftype entsprechend variiert werden.

Die Fig. 2, 3 und 4 zeigen Honringvarianten bzw. Schnitte durch Honringe; die unter Fig. 1 beschriebenen Merkmale bleiben aber bei allen Varianten gleich.

Fig. 5 stellt einen Honring mit einer metaillschen Maschinenaufnahme 6 dar, die drucklos auf den Honring aufgelegt ist. In diesem Fall bildet die Honringbohrung mit der Flanschbohrung eine zylindrische Fläche, d.h. Honring und Flanschbohrung sind fluchtend. Das Aufziehen des Honrings auf die (nicht dargestellte) Aufnahme des Schleifmaschinenantriebs erfolgt mühelos und ohne zu klemmen.

Fig. 6 zeigt denselben Honring wie in Fig. 5, allerdings mit dem Unterschied, daß hier die Maschinenaufnahme 6 vorgespannt wurde. In diesem Fall wird der elastische Trägerkörper 2 gestaucht, was zur Folge hat, daß sich der Bohrungsdurchmesser des Ringkörpers minimal verkleinert (In Fig. 6 mit Bezugszeichen 7 bezeichnet). Diese Formänderung bedingt den optimalen Sitz des Honrings auf der Aufnahme und garantiert dessen hervorragende Laufeigenschaften.

## Patentansprüche

1. Verbundhonring, bestehend aus einem Honteil und einem Trägerteil, die aus unterschiedlichen Materialien bestehen und jeweils Epoxidharz als Bindemittel umfassen, wobei der schleifaktive Honteil (1) heißverpreßt ist, eine niedrige Porosität von unter 5 % aufweist und vorzugsweise faserförmige Verstärkungselemente (5) enthält wobei der Trägerteil (2) höhere Elastizität als der Honteil (1) aufweist, aus ungefülltem Epoxidharz besteht und unter Spannung Fließeigenschaften aufweist.

2. Verbundhonring nach Anspruch 1, **dadurch gekennzeichnet, daß** die Verstärkungselemente (5) eine Länge von 0,5 bis 10 mm aufweisen.

3. Verbundhonring nach Anspruch 2, **dadurch gekennzeichnet, daß** die Verstärkungselemente Whiskers sind.

4. Verbundhonring nach Anspruch 2 oder 3, **dadurch gekennzeichnet, daB** die Verstärkungselemente aus Abrasivmaterial bestehen.

5. Verbundhonring nach einem der Ansprüche 1 bis 4, **dadurch gekennzeichnet, daß** der Honteil (1) mit Schleifkörnungen (4), ausgewählt aus Korunden, SIG, Metallnitriden, Diamant und CBN-Korn, gefüllt ist.

6. Verbundhonring nach Anspruch 5, **dadurch gekennzeichnet, daß** die Schleifkömungen (4) eine Komgröße von ≤ 200 µm aufweisen.

## Claims

1. A composite honing ring, consisting of a honing section and a support section being made of different materials and each comprising epoxy resin as a binder; wherein the abrasive honing section (1) is hot-pressed, has a low porosity below 5 %, and preferably contains fibrous reinforcing elements (5); and wherein the support section (2) has a higher elasticity than the honing section (1), is made of unfilled epoxy resin and exhibits flow properties under stress.

2. The composite honing ring according to claim 1, **characterized in that** the reinforcing elements (5) have a length from 0.5 to 10 mm.

3. The composite honing ring according to claim 2, **characterized in that** the reinforcing elements are whiskers.

4. The composite honing ring according to claim 2 or claim 3, **characterized in that** the reinforcing elements consist of abrasive material.

5. The composite honing ring according to any of claims 1 to 4, **characterized in that** the honing section (1) is filled with abrasive grains (4) selected from corundums, SiC, metal nitrides, diamond and CBN grains.

6. The composite honing ring according to claim 5, **characterized in that** the abrasive grains (4) have a grain size of ≤ 200 µm.

## Revendications

1. Couronne à honage composite, consistant d'une partie à honage et d'une partie de support étant fabriquées en matériaux différents et respectivement comprenant de la résine époxyde comme liant; la partie à honage abrasive (1) étant pressée à chaud, ayant une porosité basse en dessous de 5 %, et préférablement comportant des éléments de renforcement fibreux (5); et la partie de support (2) ayant une élasticité plus élevée que la partie à honage (1), consistant d'une résine époxyde sans charge et ayant des caractéristiques de plasticité sous tension.

2. Couronne à honage composite selon la revendication 1, **caractérisée en ce que** les éléments de renforcement (5) ont une longueur de 0,5 à 10 mm.

3. Couronne à honage composite selon la revendication 2, **caractérisée en ce que** les éléments de renforcement sont des whiskers.

4. Couronne à honage composite selon la revendication 2 ou 3, **caractérisée en ce que** les éléments de renforcement sont composés de matière abrasive.

5. Couronne à honage selon l'une des revendications 1 à 4, **caractérisée en ce que** la partie à honage (1) est chargée de granules abrasifs (4) choisis parmi corindons, SiC, nitrures métalliques, diamant et granules CBN.

6. Couronne à honage selon la revendication 5, **caractérisée en ce que** les granules abrasifs (4) ont une granulométrie de ≤ 200 µm.
